# EUROPÄISCHE PATENTSCHRIFT

(11) **EP 0 667 425 B1**
(45) Veröffentlichungstag und Bekanntmachung des Hinweises auf die Patenterteilung: **23.12.1998**
(21) Anmeldenummer: 95101855.5
(22) Anmeldetag: 10.02.1995
(51) Int. Cl.: E04C 2/54

(54) **Wärmedämmendes Glaselement, insbes. für den Brüstungsbereich von Gebäudefassaden oder dergl.**
Heat insulating glass panel, for spandrels of curtain walls
Panneau en verre isolant, pour panneau de revêtement de façade d'un bâtiment

(30) Priorität: 12.02.1994 DE 4404567
(43) Veröffentlichungstag der Anmeldung: 16.08.1995
(73) Patentinhaber: NORSK HYDRO ASA, 0240 Oslo (NO)
(72) Erfinder: Schulz, Harald, Dr., D-86381 Krumbach (DE)
(74) Vertreter: Dziewior, Joachim, Dipl.-Phys. Dr.

(56) Entgegenhaltungen:
- EP-A- 0 243 912
- FR-A- 2 321 025
- US-A- 4 302 503
- US-A- 4 610 115

## Beschreibung

Die Erfindung betrifft ein wärmedämmendes Glaselement, insbesondere für den Brüstungsbereich von Gebäudefassaden oder dergl., mit einem aus Glas bestehenden Elementteil, dessen gebäudeseitige Fläche mit Abstand einer Dämmplatte oder dergleichen gegenübersteht, wobei zwischen dem Elementteil und der Dämmplatte eine L-E-Scheibe angeordnet ist.

Derartige Glaselemente dienen insbesondere dazu, eine einheitliche Fassadenfläche zu schaffen, wobei im Brüstungsbereich eine Durchsichtigkeit des Glaselements nicht erforderlich bzw. unerwünscht ist. Das Elementteil kann dabei aus Isolierglas oder einer Einfachscheibe bestehen.

Aus der EP-A-0 243 912 ist ein aus zwei Platten bestehendes Wand- bzw. Brüstungselement bekannt, bei welchem zwischen den beiden Platten eine die konvektive Wärmeübertragung und die Wärmestrahlung reduzierende, voluminöse Dämmschicht zwischen den beiden Platten eingeschlossen ist. Die Dämmschicht besteht aus einem für das solare Strahlungsspektrum durchlässigen Werkstoff, insbesondere einem strukturierten, anorganischen oder organischen Fasergewebe, das auf seiner der außenseitigen Platte zugewandten Seite eine Weißglasscheibe trägt, die mit einer L-E-Schicht versehen ist. Die zwischen den beiden Platten eingeschlossene Dämmschicht kann dabei ihrerseits unterschiedlich gestaltet und mit zusätzlichen Elementen wie beispielsweise einer Weißglasscheibe versehen sein. Sinn dieser Maßnahmen ist, die Dämmschicht vor einer starken Erwärmung durch solare Strahlung wirksam zu schützen.

Hiervon ausgehend liegt der Erfindung die Aufgabe zugrunde, ein derartiges Glaselement so auszubilden, daß es einerseits nicht durchsichtig ist, wie dies in der Regel im Brüstungsbereich erwünscht ist, und andererseits eine verbesserte Wärmedämmung aufweist.

Diese Aufgabe wird nach einer ersten Ausgestaltung der Erfindung dadurch gelöst, daß die gebäudeseitige Fläche des Elementteils mit einer opaken Schicht versehen ist und das Elementteil aus zwei voneinander beabstandeten Einzelscheiben besteht und der zwischen den Einzelscheiben gebildete Scheibenzwischenraum mit Luft oder Edelgas gefüllt ist.

Dadurch wird der Vorteil einer wesentlichen Verbesserung der Wärmedämmungseigenschaften des im Brüstungsbereich einzusetzenden Elementteils erreicht, das darüberhinaus undurchsichtig ist.

Der Abstand der beiden Einzelscheiben beträgt dabei zweckmäßigerweise 4, 6 oder 8 mm. Die beiden Einzelscheiben können in der Art eines normalen Isolierglases aufgebaut sein. Es besteht jedoch auch die Möglichkeit, daß der zwischen den Einzelscheiben gebildete Scheibenzwischenraum über wenigstens eine Druckausgleichsöffnung mit der Außenatmosphäre verbunden ist.

Die außenseitig angeordnete Einzelscheibe des Elementteils kann an ihrer dem Scheibenzwischenraum zugewandten Seite unbeschichtet oder mit einer Sonnenschutzschicht und/oder einer Wärmeschutzschicht versehen sein. Die innenseitig angeordnete Einzelscheibe des Elementteils kann ebenfalls auf ihrer dem Scheibenzwischenraum zugewandten Seite entweder unbeschichtet oder aber mit einer Wärmeschutzschicht versehen sein.

Die L-E-Scheibe ist zweckmäßigerweise mit Abstand zum Elementteil angeordnet, wobei der dadurch gebildete Scheibenzwischenraum über wenigstens eine Druckausgleichsöffnung mit der Außenatmosphäre verbunden ist. In die Druckausgleichsöffnung ist dabei zweckmäßigerweise ein Staubsieb oder -filter eingesetzt, um das Eindringen von Verschmutzungen in den Scheibenzwischenraum zu vermeiden.

Der Abstand zwischen dem Elementteil und der L-E-Scheibe beträgt vorteilhafterweise maximal 15 mm.

Es besteht jedoch nach einer weiteren Ausführungsform der Erfindung die ebenfalls vorteilhafte Möglichkeit, daß die L-E-Scheibe über eine Bindeschicht fest mit dem Elementteil verbunden ist.

Nach einer zweiten Ausgestaltung der Erfindung wird die zugrunde liegende Aufgabe dadurch gelöst, daß die gebäudeseitige Fläche des Elementteils mit einer opaken Schicht versehen ist und die L-E-Scheibe über eine Bindeschicht fest mit dem Elementteil verbunden ist. Die Bindeschicht kann dabei von einer Folie, von einem Kleber oder von Gießharz gebildet sein. Hierdurch sind die L-E-Scheibe und das Elementteil als Verbundsicherheitsglas ausgebildet.

Die Bindeschicht kann aber auch von einer opaken Klebeschicht, z. B. einer eingefärbten PVB-Folie gebildet sein, wodurch auf das zusätzliche Aufbringen einer opaken Schicht verzichtet werden kann.

Die opake Schicht ist zweckmäßigerweise von einer Emaillierung, einer Opacifierfolie, einer Lackschicht oder einer Silikonbeschichtung gebildet. Weiter ist im Rahmen der Erfindung vorgesehen, daß die L-E-Scheibe aus Glas besteht, deren dem Elementteil abgewandte Fläche entweder unbeschichtet oder mit einer witterungsbeständigen, porolytisch aufgebrachten Beschichtung versehen ist, und/oder deren andere Fläche mit einer ebenfalls witterungsbeständigen, pyrolytisch aufgebrachten Beschichtung versehen ist.

Sofern eine beidseitige Beschichtung der L-E-Scheibe nicht möglich ist, sieht die Erfindung vor, daß die L-E-Scheibe aus zwei über eine Klebefolie, Gießharz oder dergl. miteinander verbundenen Einzelscheiben besteht, deren jeweils einander abgewandten Außenseiten mit der witterungsbeständigen, pyrolytisch aufgebrachten Beschichtung versehen sind.

Die außenseitige Fläche des Elementteils kann entweder unbeschichtet oder aber mit einer reflektierenden Sonnenschutzschicht versehen sein.
Im folgenden wir die Erfindung an in der Zeichnung dargestellten Ausführungsbeispielen näher erläutert; es zeigen:
- Fig. 1: ein Glaselement nach der Erfindung in einer ersten Ausführungsform,
- Fig. 2: eine alternative Ausgestaltung der L-E-Scheibe,
- Fig. 3: eine zweite Ausführungsform der Erfindung.
- Fig. 4 und 5: alternative Ausgestaltungen der Ausführungsform nach Fig. 3.

Das in der Zeichnung dargestellte Glaselement ist insbes. zur Anbringung im Brüstungsbereich von Gebäudefassaden oder dergl. vorgesehen und besteht aus einem Elementteil 1 aus Glas, dessen gebäudeseitige Fläche mit einer opaken Schicht 2 versehen ist. Das Glaselement, das auch der Wärmedämmung dient, ist mit Abstand zu einer Dämmplatte 3 oder dergl. angeordnet.

Zu einer weiteren Erhöhung der Wärmedämmung ist zwischen dem Elementteil 1 und der Dämmplatte 3 eine zusätzliche L-E-Scheibe 4 angeordnet, die eine geringe Emissivität und ein hohes Reflektionsvermögen für Infrarotstrahlung besitzt.

Die opake Schicht 2 des Elementteils 1 ist von einer Emaillierung oder einer Opacifierfolie, einer Lackschicht oder einer Silikonbeschichtung gebildet.

Die L-E-Scheibe 4 besteht aus Glas, wobei deren dem Elementteil 1 abgewandte Fläche entweder unbeschichtet oder mit einer witterungsbeständigen, pyrolytisch aufgebrachten Beschichtung 6 versehen ist. Die andere Fläche der L-E-Scheibe ist ebenfalls mit einer witterungsbeständigen, pyrolytisch aufgebrachten Beschichtung 5 versehen.

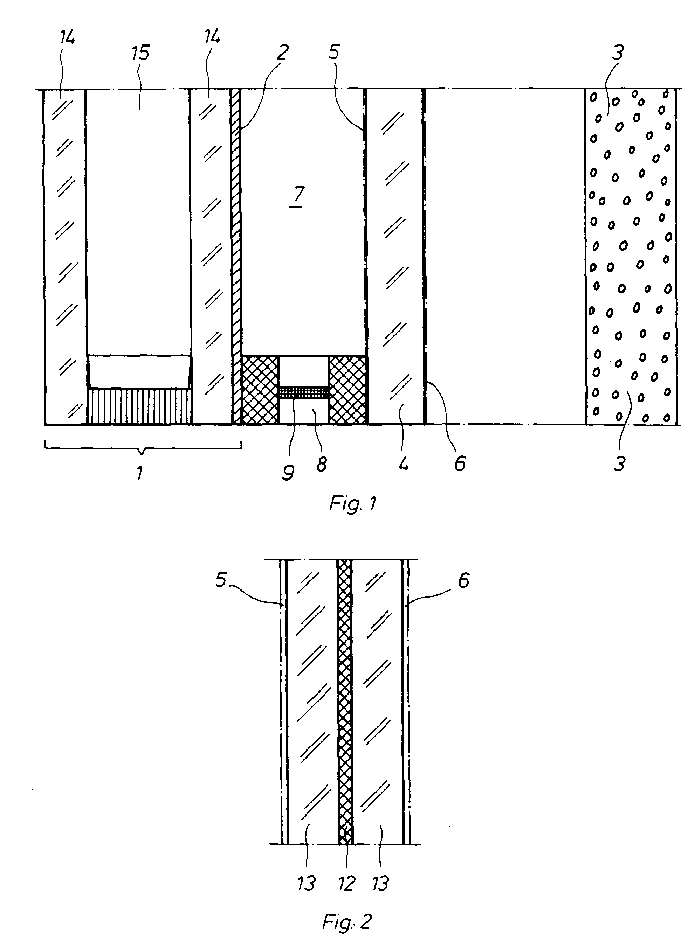

Wie sich aus der Fig. 1 ergibt, ist die L-E-Scheibe 4 mit Abstand zum Elementteil 1 angeordnet, wobei der dadurch gebildete Scheibenzwischenraum 7 über wenigstens eine Druckausgleichsöffnung 8 mit der Außenatmosphäre verbunden ist. In die Druckausgleichsöffnung 8 ist ein Staubsieb 9 bzw. ein Staubfilter eingesetzt, um das Eindringen von Verschmutzungen in den Scheibenzwischenraum 7 zu verhindern. Der Abstand zwischen dem Elementteil 1 und der L-E-Scheibe 4 beträgt vorteilhafterweise maximal 15 mm.

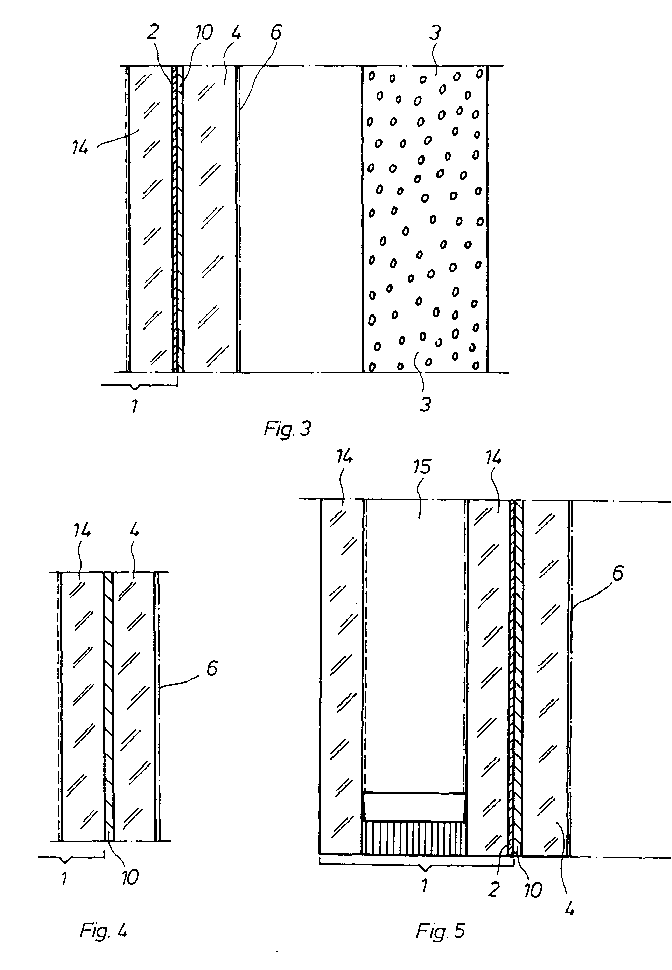

Es besteht jedoch ebenso die in den Fig. 3 bis 5 dargestellte Möglichkeit, daß die L-E-Scheibe 4 über eine Bindeschicht 10 fest mit dem Elementteil 1 verbunden ist. Die Bindeschicht 10 kann dabei, wie dies in den Fig. 3 bis 5 angedeutet ist, von einer Folie, von einem Kleber oder von Gießharz gebildet sein. Dabei besteht insbes. auch die Möglichkeit, auf die opake Schicht völlig zu verzichten, wenn - gemäß Fig. 4 - die Bindeschicht 10 von einer opaken Klebeschicht, z. B. einer eingefärbten PVB-Folie gebildet ist. Die L-E-Scheibe 4 und das Elementteil sind durch diesen Aufbau als Verbund-Sicherheitsglas ausgebildet.

Sofern die beidseitige Beschichtung der L-E-Scheibe 4 mit einer infrarotreflektierenden Schicht nicht möglich ist, besteht die in Fig. 2 dargestellte Möglichkeit, daß die L-E-Scheibe 4 aus zwei über eine Klebefolie 12, Gießharz oder dergl. miteinander verbundenen Einzelscheiben 13 besteht. Bei diesen Einzelscheiben 13 sind dann die jeweils einander abgewandten Außenseiten mit der witterungsbeständigen, pyrolytisch aufgebrachten Beschichtung 5, 6 versehen.

Die außenseitige Fläche des Elementteils 1 kann, wie in Fig. 1 angedeutet, entweder unbeschichtet oder aber mit einer reflektierenden Sonnenschutzschicht versehen sein. Darüber hinaus kann das Elementteil 1 aus zwei voneinander beabstandeten Einzelscheiben 14 bestehen, wobei der zwischen den Einzelscheiben 14 gebildete Scheibenzwischenraum 15 mit Luft oder Edelgas gefüllt ist. Der Abstand der beiden Einzelscheiben 14 wird hier zweckmäßigerweise geringer gewählt und kann vorzugsweise 4, 6 oder 8 mm betragen. Auch hier besteht die in der Zeichnung nicht dargestellte Möglichkeit, das der zwischen den Einzelscheiben 14 gebildete Scheibenzwischenraum 15 über wenigstens eine Druckausgleichsöffnung mit der Außenatmosphäre verbunden ist.

Die außenseitig angeordnete Einzelscheibe 14 des Elementteils 1 kann an ihrer dem Scheibenzwischenraum 15 zugewandten Seite unbeschichtet oder mit einer Sonnenschutzschicht und/oder einer Wärmeschutzschicht versehen sein. Die innenseitig angeordnete Einzelscheibe 14 des Elementteils 1 kann an ihrer dem Scheibenzwischenraum 15 zugewandten Seite ebenfalls unbeschichtet oder aber mit einer Wärmeschutzschicht versehen sein.

## Patentansprüche

1. Wärmedämmendes Glaselement, insbesondere für den Brüstungsbereich von Gebäudefassaden oder dergl., mit einem aus Glas bestehenden Elementteil (1), dessen gebäudeseitige Fläche mit Abstand einer Dämmplatte (3) oder dergleichen gegenübersteht, wobei zwischen dem Elementteil (1) und der Dämmplatte (3) eine zusätzliche L-E-Glasscheibe (4) mit mindestens einer Schicht von geringer Emissivität und hohem Reflektionsvermögen für Infrarotstrahlung angeordnet ist, dadurch gekennzeichnet, daß die gebäudeseitige Fläche des Elementteils(1) mit einer opaken Schicht (2) versehen ist und das Elementteil (1) aus zwei voneinander beabstandeten Einzelscheiben (14) besteht und der zwischen den Einzelscheiben (14) gebildete Scheibenzwischenraum (15) mit Luft oder Edelgas gefüllt ist.

2. Glaselement nach Anspruch 1, dadurch gekennzeichnet, daß der Abstand der beiden Einzelscheiben (14) 4, 6 oder 8 mm beträgt.

3. Glaselement nach Anspruch 1 oder 2, dadurch gekennzeichnet, daß der zwischen den Einzelscheiben (14) gebildete Scheibenzwischenraum (15) über wenigstens eine Druckausgleichsöffnung mit der Außenatmosphäre verbunden ist.

4. Glaselement nach einem der Ansprüche 1 bis 3, dadurch gekennzeichnet, daß die außenseitig angeordnete Einzelscheibe (14) des Elementteils (1) an ihrer dem Scheibenzwischenraum (15) zugewandten Seite unbeschichtet oder mit einer Sonnenschutzschicht und/oder einer Wärmeschutzschicht versehen ist.

5. Glaselement nach einem der Ansprüche 1 bis 4, dadurch gekennzeichnet, daß die innenseitig angeordnete Einzelscheibe (14) des Elementteils (1) an ihrer dem Scheibenzwischenraum (15) zugewandten Seite unbeschichtet oder mit einer Wärmeschutzschicht versehen ist.

6. Glaselement nach einem der Ansprüche 1 bis 5, dadurch gekennzeichnet, daß die L-E-Scheibe (4) mit Abstand zum Elementteil (1) angeordnet ist, wobei der dadurch gebildete Scheibenzwischenraum (7) über wenigstens eine Druckausgleichsöffnung (8) mit der Außenatmosphäre verbunden ist.

7. Glaselement nach Anspruch 6, dadurch gekennzeichnet, daß in die Druckausgleichsöffnung ein Staubsieb (9) oder -filter eingesetzt ist.

8. Glaselement nach Anspruch 6 oder 7, dadurch gekennzeichnet, daß der Abstand zwischen dem Elementteil (1) und der L-E-Scheibe (4) maximal 15 mm beträgt.

9. Glaselement nach einem der Ansprüche 1 bis 5, dadurch gekennzeichnet, daß die L-E-Scheibe (4) über eine Bindeschicht (10) fest mit dem Elementteil (1) verbunden ist.

10. Wärmedämmendes Glaselement, insbesondere für den Brüstungsbereich von Gebäudefassaden oder dergl., mit einem aus Glas bestehenden Elementteil (1), dessen gebäudeseitige Fläche mit Abstand einerDämmplatte (3) oder dergleichen gegenübersteht, wobei zwischen dem Elementteil (1) und der Dämmplatte (3) eine zusätzliche L-E-Glasscheibe (4) mit mindestens einer Schicht von geringer Emissivität und hohem Reflektionsvermögen für Infrarotstrahlung angeordnet ist, dadurch gekennzeichnet, daß die gebäudeseitige Fläche des Elementteils mit einer opaken Schicht (2) versehen ist und die L-E-Scheibe (4) über eine Bindeschicht (10) fest mit dem Elementteil (1) verbunden ist.

11. Glaselement nach einem der Ansprüche 9 oder 10, dadurch gekennzeichnet, daß die Bindeschicht (10) von einer Folie, von einem Kleber oder von Gießharz gebildet ist.

12. Glaselement nach Anspruch 11, dadurch gekennzeichnet, daß die Bindeschicht (10) von einer opaken Klebeschicht, z.B. einer eingefärbten PVB-Folie gebildet ist.

13. Glaselement nach einem der Ansprüche 1 bis 12, dadurch gekennzeichnet, daß die opake Schicht (2) von einer Emaillierung, einer Opacifierfolie, einer Lackschicht oder einer Silikonbeschichtung gebildet ist.

14. Glaselement nach einem der Ansprüche 1 bis 13, dadurch gekennzeichnet, daß die L-E-Scheibe (4) aus Glas besteht, deren dem Elementteil (1) abgewandte Fläche entweder unbeschichtet oder mit einer witterungsbeständigen, pyrolytisch aufgebrachten Beschichtung (6) versehen ist, und/oder deren andere Fläche mit einer ebenfalls witterungsbeständigen, pyrolytisch aufgebrachten Beschichtung (5) versehen ist.

15. Glaselement nach einem der Ansprüche 1 bis 14, dadurch gekennzeichnet, daß die L-E-Scheibe (4) aus zwei über eine Klebefolie (12), Gießharz oder dergl. miteinander verbundenen Einzelscheiben (13) besteht, deren jeweils einander abgewandte Außenseiten mit der witterungsbeständigen, pyrolytisch aufgebrachten Beschichtung (5, 6) versehen sind.

16. Glaselement nach einem der Ansprüche 1 bis 15, dadurch gekennzeichnet, daß die außenseitige Fläche des Elementteils (1) entweder unbeschichtet oder mit einer reflektierenden Sonnenschutzschicht versehen ist.

## Claims

1. A heat-insulating glass element, in particular for the parapet region of building facades or the like, comprising an element portion (1) which comprises glass and whose surface at the building side is disposed at a spacing in opposite relationship to an insulating panel (3) or the like, wherein arranged between the element portion (1) and the insulating panel (3) is an additional L-E-glass pane (4) with at least one layer of low emissivity and high reflection capability for infra-red radiation, characterised in that the surface of the element portion (1) at the building side is provided with an opaque layer (2) and the element portion (1) comprises two spaced-apart individual panes (14) and the pane interspace (15) formed between the individual panes (14) is filled with air or inert gas.

2. A glass element according to claim 1 characterised in that the spacing of the two individual panes (14) is 4, 6 or 8 mm.

3. A glass element according to claim 1 or claim 2 characterised in that the pane interspace (15) formed between the individual panes (14) is communicated with the outside atmosphere by way of at least one pressure equalisation opening.

4. A glass element according to one of claims 1 to 3 characterised in that, at its side towards the pane interspace (15), the individual pane (14) of the element portion (1), which is arranged at the outward side, is uncoated or is provided with a sun protection layer and/or a heat protection layer.

5. A glass element according to one of claims 1 to 4 characterised in that, at its side towards the pane interspace (15), the individual pane (14) of the element portion (1), which is arranged at the inward side, is uncoated or is provided with a heat protection layer.

6. A glass element according to one of claims 1 to 5 characterised in that the L-E-pane (4) is arranged at a spacing relative to the element portion (1), wherein the pane interspace (7) formed thereby is communicated with the outside atmosphere by way of at least one pressure equalisation opening (8).

7. A glass element according to claim 6 characterised in that a dust sieve (9) or filter is fitted into the pressure equalisation opening.

8. A glass element according to claim 6 or claim 7 characterised in that the spacing between the element portion (1) and the L-E-pane (4) is a maximum of 15 mm.

9. A glass element according to one of claims 1 to 5 characterised in that the L-E-pane (4) is fixedly connected to the element portion (1) by way of a bonding layer (10).

10. A heat-insulating glass element, in particular for the parapet region of building facades or the like, comprising an element portion (1) which comprises glass and whose surface at the building side is disposed at a spacing in opposite relationship to an insulating panel (3) or the like, wherein arranged between the element portion (1) and the insulating panel (3) is an additional L-E-glass pane (4) with at least one layer of low emissivity and high reflection capability for infra-red radiation, characterised in that the surface of the element portion (1) at the building side is provided with an opaque layer (2) and the L-E-pane (4) is fixedly connected to the element portion (1) by way of a bonding layer (10).

11. A glass element according to one of claims 9 and 10 characterised in that the bonding layer (10) is formed by a foil, an adhesive or a casting resin.

12. A glass element according to claim 11 characterised in that the bonding layer (10) is formed by an opaque adhesive layer, for example a coloured PVB-foil.

13. A glass element according to one of claims 1 to 12 characterised in that the opaque layer (2) is formed by an enamelling, an opacifier foil, a lacquer layer or a silicone coating.

14. A glass element according to one of claims 1 to 13 characterised in that the L-E-pane (4) comprises glass whose surface which is remote from the element portion (1) is either uncoated or is provided with a weather-resistant, pyrolytically applied coating (6), and/or whose other surface is provided with an also weather-resistant, pyrolytically applied coating (5).

15. A glass element according to one of claims 1 to 14 characterised in that the L-E-pane (4) comprises two individual panes (13) which are connected together by way of an adhesive foil (12), casting resin or the like and whose respectively mutually remote outward sides are provided with the weather-resistant, pyrolytically applied coating (5, 6).

16. A glass element according to one of claims 1 to 15 characterised in that the outward surface of the element portion (1) is either uncoated or is provided with a reflective sun protection layer.

## Revendications

1. Panneau en verre thermiquement isolant, notamment pour la zone de garde-fou de façades d'immeubles ou similaire, avec un élément de panneau (1) en verre, dont la face tournée vers le bâtiment est disposée à distance en vis-à-vis d'un panneau isolant (3) ou similaire, une feuille de verre LE (4) supplémentaire pourvue d'au moins une couche à faible pouvoir émissif et haut pouvoir réfléchissant pour le rayonnement infrarouge étant disposée entre l'élément de panneau (1) et le panneau isolant (3), caractérisé par le fait que la face tournée vers le bâtiment de l'élément de panneau (1) est pourvue d'un revêtement (2) opaque et par le fait que l'élément de panneau (1) est formé de deux feuilles élémentaires (14) espacées l'une de l'autre et que l'espace entre feuilles (15) formé entre les deux feuilles élémentaires (14) est rempli d'air ou de gaz rare.

2. Panneau en verre selon la revendication 1, caractérisé par le fait que la distance entre les feuilles élémentaires (14) est de 4, 6 ou 8 mm.

3. Panneau en verre selon la revendication 1 ou 2, caractérisé par le fait que l'espace entre feuilles (15) formé entre les deux feuilles élémentaires (14) communique avec l'atmosphère par au moins une ouverture d'équilibrage de pression.

4. Panneau en verre selon une des revendications 1 à 3, caractérisé par le fait que la feuille élémentaire (14) extérieure de l'élément de panneau (1), sur sa face tournée vers l'espace entre feuilles (15), ne comporte pas de revêtement ou est pourvue d'une couche de protection contre le rayonnement solaire et/ou d'une couche de protection contre la chaleur.

5. Panneau en verre selon une des revendications 1 à 4, caractérisé par le fait que la feuille élémentaire (14) intérieure de l'élément de panneau (1), sur sa face tournée vers l'espace entre feuilles (15), ne comporte pas de revêtement ou est pourvue d'une couche protection contre la chaleur.

6. Panneau en verre selon une des revendications 1 à 5, caractérisé par le fait que la feuille LE (4) est disposée à distance de l'élément de panneau (1), l'espace entre feuilles (7) ainsi formé communiquant avec l'atmosphère par au moins une ouverture d'équilibrage de pression (8).

7. Panneau en verre selon la revendication 6, caractérisé par le fait qu'une barrière à poussière ou un filtre à poussière (9) est monté dans l'ouverture d'équilibrage de pression.

8. Panneau en verre selon la revendication 6 ou 7, caractérisé par le fait que la distance entre l'élément de panneau (1) et la feuille LE (4) est de 15 mm maximum.

9. Panneau en verre selon une des revendications 1 à 5, caractérisé par le fait que la feuille LE (4) est liée fermement à l'élément de panneau (1) par l'intermédiaire d'une couche de liaison (10).

10. Panneau en verre thermiquement isolant, notamment pour la zone de garde-fou de façades d'immeubles ou similaire, avec un élément de panneau (1) en verre, dont la face tournée vers le bâtiment est disposée à distance en vis-à-vis d'un panneau isolant (3) ou similaire, une feuille de verre LE (4) supplémentaire pourvue d'au moins une couche à faible pouvoir émissif et haut pouvoir réfléchissant pour le rayonnement infrarouge étant disposée entre l'élément de panneau (1) et le panneau isolant (3), caractérisé par le fait que la face tournée vers le bâtiment de l'élément de panneau (1) est pourvue d'un revêtement (2) opaque et par le fait que la feuille LE (4) est liée fermement à l'élément de panneau (1) par l'intermédiaire d'une couche de liaison (10).

11. Panneau en verre selon la revendication 9 ou 10, caractérisé par le fait que la couche de liaison (10) est formée d'un film, d'une colle ou d'une résine coulable.

12. Panneau en verre selon la revendication 11, caractérisé par le fait que la couche de liaison (10) est formée d'une couche adhésive opaque, par exemple d'un film PVB coloré dans la masse.

13. Panneau en verre selon une des revendications 1 à 12, caractérisé par le fait que la couche opaque (2) est formée d'un émail, d'un film opacifiant, d'une couche de peinture ou d'un revêtement de silicone.

14. Panneau en verre selon une des revendications 1 à 13, caractérisé par le fait que la feuille LE (4) est en verre, que sa face éloignée de l'élément de panneau (1), soit ne comporte pas de revêtement, soit est pourvue d'un revêtement (6) résistant aux intempéries appliqué par voie pyrolytique et/ou que son autre face est pourvue d'un revêtement (5), également résistant aux intempéries, appliqué par voie pyrolytique.

15. Panneau en verre selon une des revendications 1 à 14, caractérisé par le fait que la feuille LE (4) est formée de deux feuilles élémentaires (13) qui sont liées l'une à l'autre par un film adhésif (12), de la résine coulable ou similaire, dont les faces extérieures opposées sont pourvues du revêtement (5, 6) résistant aux intempéries appliqué par voie pyrolytique.

16. Panneau en verre selon une des revendications 1 à 15, caractérisé par le fait que la face extérieure de l'élément de panneau (1), soit ne comporte pas de revêtement, soit est pourvue d'un revêtement antisolaire réfléchissant.
